# EUROPÄISCHE PATENTANMELDUNG

(11) **EP 1 978 296 A2**
(43) Veröffentlichungstag der Anmeldung: **08.10.2008**
(21) Anmeldenummer: 08006803.4
(22) Anmeldetag: 03.04.2008
(51) Int. Cl.: F21S 8/12, G02B 6/00

(54) **Lichtleitkörper und Leuchteinheit mit Lichtleitkörper**

(30) Priorität: 05.04.2007 DE 102007016923
(71) Anmelder: Odelo GmbH, 71409 Schwaikheim (DE)
(72) Erfinder: Stefanov, Emil, Dr., 73728 Esslingen (DE); Specht, Stephanie, 70565 Stuttgart (DE)
(74) Vertreter: Kaufmann, Ursula Josefine

(57) **Zusammenfassung**

Die Erfindung betrifft einen Lichtleitkörper (31), dessen Querschnittsfläche sich von einer Lichteintrittsfläche (34) zu einer Lichtaustrittsfläche (36) zumindest bereichsweise stetig aufweitet sowie eine Leuchteinheit mit mindestens einer Lumineszenzdiode (22) als Lichtquelle (20) und mit einem Lichtleitkörper. Dazu umfasst der Lichtleitkörper zumindest einen Bereich mit einer gekrümmten Leitlinie, wobei in diesem Bereich die Krümmung der Leitlinie konstant ist oder wobei in diesem Bereich die Krümmung der Leitlinie mit zunehmenden Querschnitt des Lichtleitkörpers abnimmt.
Mit der vorliegenden Erfindung wird ein Lichtleitkörper und eine Leuchteinheit entwickelt, die bei einer scharf abgegrenzten Hell-Dunkel-Grenze des ausgeleuchteten Bereichs an den übrigen Rändern einen sanften Übergang der Beleuchtungsstärke ermöglicht.

## Beschreibung

Die Erfindung betrifft einen Lichtleitkörper, dessen Querschnittsfläche sich von einer Lichteintrittsfläche zu einer Lichtaustrittsfläche zumindest bereichsweise stetig aufweitet sowie eine Leuchteinheit mit mindestens einer Lumineszenzdiode als Lichtquelle und mit einem Lichtleitkörper.

Leuchteinheiten, die beispielsweise in Projektions-Kraftfahrzeugscheinwerfern eingesetzt werden, erfordern hohe Lichtströme bzw. Leuchtdichten. Weiße LED-Lichtquellen haben jedoch nach wie vor eine geringe Leuchtdichte und erfordern daher eine große aktive Quell- bzw. Chipfläche, um den erforderlichen Lichtstrom zu erzeugen. Häufig werden daher mehrere Leuchtdioden als Lichtquellen eingesetzt. Um die für den Betrieb erforderliche Beleuchtungsstärke zu erreichen, wird bereits in dem der Lichtquelle optisch nachgeschalteten optischen System, der sogenannten Primäroptik, eine Lichtstärke- bzw. Leuchtdichteerhöhung eingeleitet. Hierfür wird eine Objektzwischenebene oder ein virtuelles Bild mit geformten Cutoff, das ist ein Abschnitt der z.B. auf einer Messwand sichtbaren oberen Hell-Dunkel-Grenze, abgebildet.

Der Einsatz von Blenden wirkt sich negativ auf die effiziente Lichtverteilung im optischen Systems aus. Daher wird mit einem hochtransparenten Lichtleitkörper ein Lichtbündel geformt, das mittels einer abbildenden Sekundäroptik z.B. auf die Fahrbahn geworfen wird.

Aus der DE 10 2005 017 528 A1 ist eine Leuchteinheit mit einem derartigen Lichtleitkörper bekannt. Beim Betrieb der Leuchteinheit entstehen an allen Rändern des ausgeleuchteten Bereichs zum nicht ausgeleuchteten Bereich harte Übergänge der Beleuchtungsstärke.

Der vorliegenden Erfindung liegt daher die Problemstellung zugrunde, einen Lichtleitkörper und eine Leuchteinheit zu entwickeln, die bei einer scharf abgegrenzten Hell-Dunkel-Grenze des ausgeleuchteten Bereichs an den übrigen Rändern einen sanften Übergang der Beleuchtungsstärke ermöglicht.

Diese Problemstellung wird mit den Merkmalen des Hauptanspruches gelöst. Dazu umfasst der Lichtleitkörper zumindest einen Bereich mit einer gekrümmten Leitlinie, wobei in diesem Bereich die Krümmung der Leitlinie konstant ist oder wobei in diesem Bereich die Krümmung der Leitlinie mit zunehmenden Querschnitt des Lichtleitkörpers abnimmt. Jede Gerade, die die Lichteintrittsfläche schneidet, durchdringt eine Begrenzungsfläche des Lichtleitkörpers außerhalb der Lichtaustrittsfläche. Außerdem ist die längste, den Lichtleitkörper im gekrümmten Bereich begrenzende Mantellinie länger als die durch die maximale Ist-Krümmung der genannten Mantellinie des Lichtleitkörpers dividierte Differenz aus der Kreiszahl und dem Doppelten des größten Grenzwinkels der Totalreflexion des Werkstoffs des Lichtleitkörpers gegen den oder die Werkstoffe der an den Lichtleitkörper angrenzenden Umgebung.

Bei einem derartigen Aufbau des Lichtleitkörpers und der Leuchteinheit gibt es keine Lichtanteile, die direkt und ohne Reflexion den Lichtleitkörper durchdringen. Das gesamte Licht wird an den Grenzflächen des Lichtleitkörpers reflektiert. Das Licht wird durchmischt, so dass eine von der Sekundäroptik erzeugte Beleuchtungsstärkeverteilung unabhängig ist von der Leuchtstärkcverteilung der Lichtquelle. Damit werden sämtliche, den ausgeleuchteten Bereich begrenzenden Hell-DunkelÜbergänge durch die Primäroptik gesteuert.

Weitere Einzelheiten der Erfindung ergeben sich aus den Unteransprüchen und der nachfolgenden Beschreibung schematisch dargestellter Ausführungsformen.
- Figur 1:: Dimetrische Ansicht einer Leuchteinheit;
- Figur 2:: Seitenansicht einer Leuchteinheit;
- Figur 3:: Dimetrische Ansicht des Lichtleitkörpers;
- Figur 4:: Ansicht des Lichtaustrittsbereichs;
- Figur 5:: Längsschnitt des Lichtleitkörpers mit Lichtquelle;
- Figur 6:: Detail des Lichteintrittsbereichs;
- Figur 7:: Detail des Lichtaustrittsbereichs;
- Figur 8:: Leuchteinheit mit einer Fresnellinse als Sekundärlinse;
- Figur 9:: Kombinierte Leuchteinheit für Abblendlicht und Fernlicht.

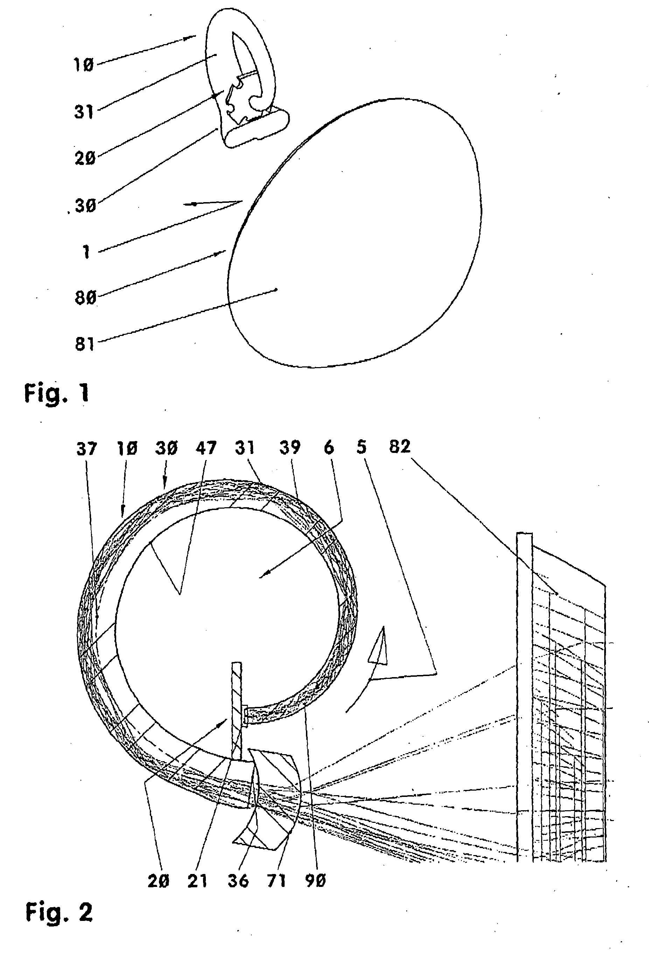

Die Figur 1 zeigt eine dimetrische Ansicht und die Figur 2 eine Seitenansicht einer Leuchteinheit (10). Diese Leuchteinheiten (10) werden beispielsweise in einem Frontscheinwerfer eines Kraftfahrzeuges eingesetzt. Sie umfassen in diesen Ausführungsbeispielen jeweils eine Lichtquelle (20), eine Primäroptik (30) mit einen Lichtleitkörper (31) und eine Sekundäroptik (80) mit jeweils einer Sekundärlinse (81; 82). In der Darstellung der Figur 2 ist der Lichtleitkörper (31) in einem Längsschnitt dargestellt. Die Primäroptik (30) umfasst in dieser Darstellung zusätzlich eine dem Lichtleitkörper (31) optisch nachgeschaltete Primärlinse (71).

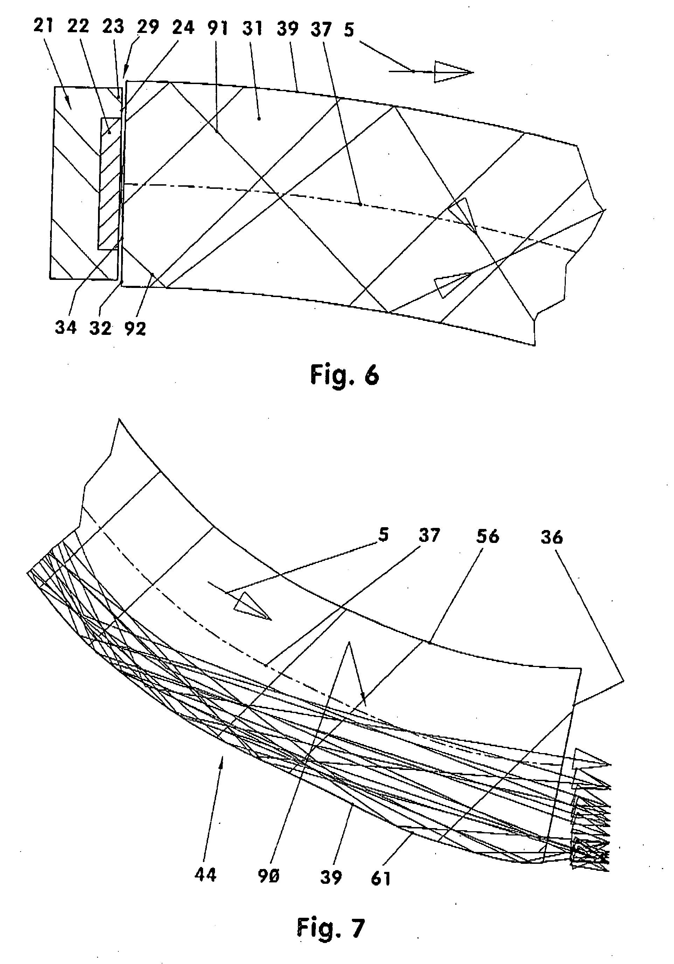

Die Lichtquelle (20) umfasst in diesen Ausführungsbeispielen eine Lumineszenzdiode, z.B. eine Leuchtdiode (21) mit beispielsweise einem lichtemittierenden Chip (22). Die Leuchtdiode (21) kann auch mehrere lichtemittierende Chips (22) umfassen, die z.B. in einem Quadrat angeordnet sind. Der lichtemittierende Chip (22) ist beispielsweise ein Lambert'scher Strahler, der Licht in einem Halbraum emittiert. Die Leuchtdiode (21) hat z.B. einen zylinderförmigen Lichtverteilkörper (23), vgl. Figur 6. Dieser ragt in diesen Ausführungsbeispielen in einer Richtung normal zum lichtemittierenden Chip (22) nicht über den Chip (22). Der Lichtverteilkörper (23) kann aber auch in der Lichtausbreitungsrichtung (5) z.B. 1,6 Millimeter über den Chip (22) hinausragen. Der Lichtverteilkörper (23) kann auch quaderförmig mit oder ohne abgerundete Ecken, tropfenförmig, etc. ausgebildet sein. Die Hauptlichtaustrittsfläche (24) ist z.B. parallel zum lichtemittierenden Chip (22).

Die einzelne Leuchtdiode (21) erzeugt beispielsweise einen Lichtstrom von 400 Lumen. Statt einer einzelnen Leuchtdiode (21) kann die Lichtquelle (20) auch mehrere Leuchtdioden (21) umfassen. Dies können weiße und/oder RGB-Leuchtdioden sein. Der Abstrahlwinkel der einzelnen Leuchtdiode (21) kann enger als 180 Grad sein, beispielsweise kann der Lichtaustritt auf einen Austrittswinkel von 150 Grad oder 120 Grad gebündelt sein.

zwischen dem Lichtverteilkörper (23) der Leuchtdiode (21) und dem Lichtleitkörper (31) besteht in den Ausführungsbeispielen ein schmaler Luftspalt (29), beispielsweise mit einer Breite kleiner als fünf Zehntel Millimetern. Dieser Luftspalt (29) ist Teil der an den Lichtleitkörper (31) angrenzenden Umgebung (1). Der Lichtverteilkörper (24) kann auch am Lichtverteilkörper (31) anliegen. Die Hauptlichtaustrittsfläche (24) des Lichtverteilkörpers (23) und die Stirnfläche (32) des Lichtleitkörpers (31) sind hier parallel zueinander angeordnet. Der Spalt (29) kann auch mit einem Werkstoff gefüllt sein, dessen Brechungszahl höher ist als die Brechungszahl von Luft, z.B. 1,1.

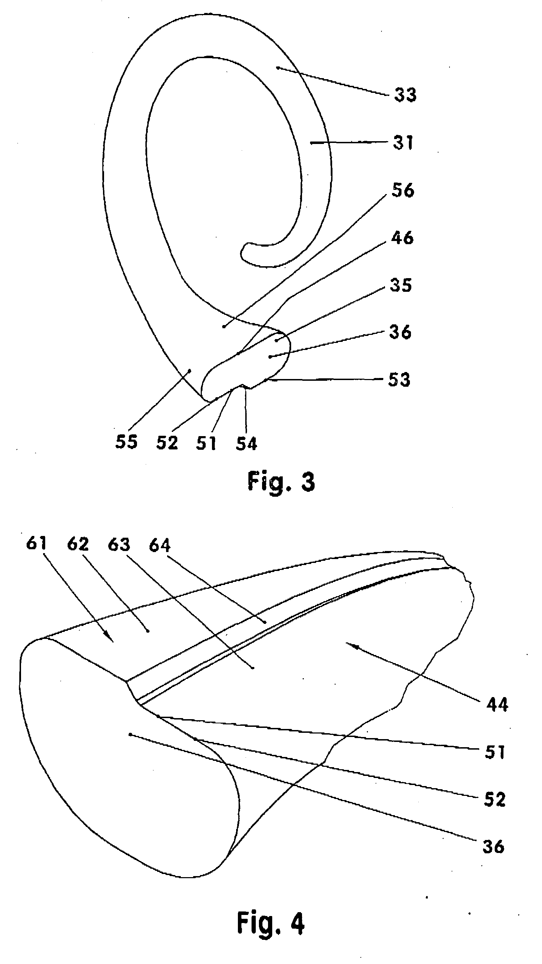

Der Lichtleitkörper, vgl. Figur 3, besteht aus einem thermoplastischen Werkstoff, z.B. Polymethacrylsäuremethylester (PMMA), Polycarbonat (PC) oder z.B. modifiziertes Polymethylmethacrylimid (PMMI). Der Werkstoff des beispielsweise als Vollkörper ausgebildeten Lichtleitkörpers (31) hat z.B. beim Einsatz von PMMA eine optische Brechzahl von 1,49. Die Mantelfläche (33) des Lichtleitkörpers (31) grenzt in den Ausführungsbeispielen unmittelbar an die den Lichtleitkörper (31) umgebende Luft. Die Umgebung (1) des Lichtleitkörpers (31) hat somit in diesen Ausführungsbeispielen eine Brechzahl von 1. Der Lichtleitkörper (31) kann auch von einem zweiten Körper umhüllt sein, der z.B. eine niedrigere Brechzahl als der Lichtleitkörper (31) hat. Auch kann der Lichtleitkörper (31) an seiner Mantelfläche (33) eine Beschichtung, z.B. eine Verspiegelung umfassen.

Der Lichtleitkörper (31) hat in dem in den Figuren 1 bis 7 dargestellten Ausführungsbeispielen die Gestalt einer Spirale, z.B. einer archimedischen Spirale, die sich von der Lichtquelle (20) zur Sekundäroptik (80) hin aufweitet. Die der Lichtquelle (20) zugewandte Stirnfläche (32) des Lichtleitkörpers (31) umfasst eine Lichteintrittsfläche (34) und die der Sekundäroptik (80) zugewandte Stirnfläche (35) umfasst eine Lichtaustrittsfläche (36). Die Lichteintrittsfläche (34) und die Lichtaustrittsfläche (36) sind die optisch genutzten Bereiche der zugehörigen Stirnflächen (32, 35) und können kleiner als die Stirnflächen (32, 35) sein. Die Lichteintritts- (34) und die Lichtaustrittsfläche (36) liegen beispielsweise in Ebenen, die z.B. miteinander einen Winkel von 10 Grad einschließen.

Die in den Figuren 1 - 7 dargestellten Lichtleitkörper (31) haben eine gekrümmte Leitlinie (37), die der geometrischen Mittellinie des Lichtleitkörpers (31) entspricht. Der die Leitlinie (37) umgebende Lichtleitkörper (31) hat eine außenliegende Mantellinie (39). Diese Mantellinie (39) ist die längste Mantellinie des Lichtleitkörpers (31). Sie ist die Linie, die in der Lichtausbreitungsrichtung (5)die Punkte der Mantelfläche (33) mit der kleinsten Krümmung verbindet.

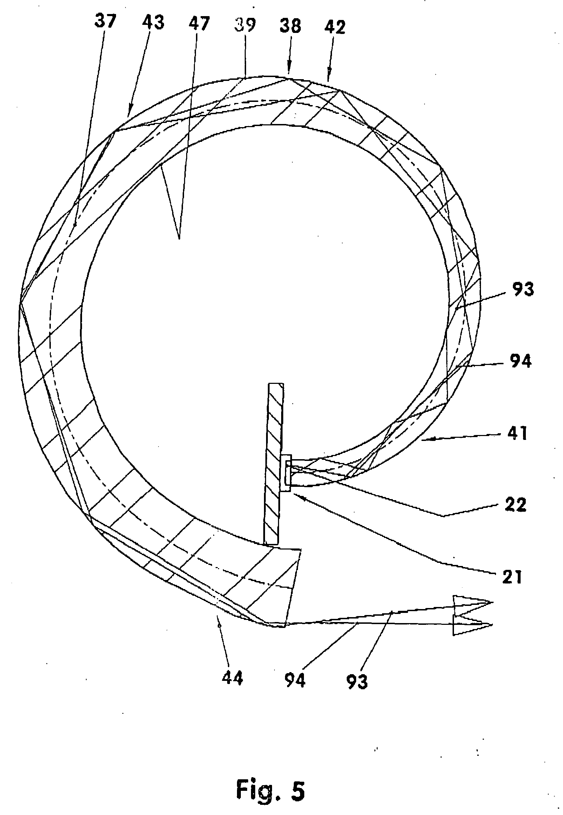

In den dargestellten Ausführungsbeispielen liegen die Leitlinie (37) und die Mantellinie (39) gemeinsam in einer Ebene. Die Krümmung der Leitlinie (37) und die Krümmung der Mantellinie (39) haben z.B. einen konstanten Mittelpunkt. Beide Krümmungen weisen keinen Wendepunkt auf. Sie nehmen hier von der Lichteintrittsfläche (34) zur Lichtaustrittsfläche (36) hin ab, vgl. Figuren 2 und 5. Der Lichtleitkörper (31) kann aber auch so aufgebaut sein, dass die Leitlinie (37) und/oder die Mantellinie (39) jeweils nicht in einer Ebene liegen. So kann die Spirale z.B. schraubenförmig ausgebildet sein. Auch können die Linien (37, 39) jeweils abschnittsweise unterschiedliche Krümmungsmittelpunkte haben. Die Leitlinie (37) des Lichtleitkörpers (31) kann anstatt die Gestalt einer Spirale die Gestalt eines Kreisbogenabschnitts haben. In diesem Fall ist die Krümmung der Leitlinie (37) konstant.

Der Lichtleitkörper (31) kann einen oder mehrere Bereiche mit einer geraden Leitlinie (37) haben. Ein derartiger Bereich grenzt dann beispielsweise an die Lichteintrittsfläche (34) an.

Die Lichteintrittsfläche (34) und die Lichtaustrittsfläche (36) sind in den Ausführungsbeispielen normal zu der Ebene angeordnet, in der die Leitlinie (37) liegt. Sie können aber auch hierzu geneigt sein. Der Lichtleitkörper (31) ist jedoch so aufgebaut, dass jede Gerade durch die Lichteintrittsfläche (34) die Mantelfläche (33) des Lichtleitkörpers (31) außerhalb der Lichtaustrittsfläche (36) durchdringt. Es gibt somit in der Leuchteinheit (10) keinen Lichtstrahl, der den Lichtleitkörper (31) von der Lichteintrittsfläche (34) zur Lichtaustrittsfläche (36) durchdringt, ohne dass er an der Mantelfläche (33), der Grenzfläche (33) des Lichtleitkörpers (31), reflektiert wird.

Die Leitlinie (37) und die Mantellinie (39) des Lichtleitkörpers (31) überstreichen in den Ausführungsbeispielen einen Winkel von z.B. 360 Grad. Der von den Linien (37, 39) überstrichene Winkel kann auch kleiner sein, z.B. 180 Grad oder 90 Grad. Die Länge L der Mantellinie (39) in diesem gekrümmten Bereich (38) des Lichtleitkörpers (31) ist hierbei länger als 2 * ((PI/2) - Alpha)/KIₘₐₓ, wobei KIₘₐₓ die größte Ist-Krümmung der Mantellinie (39) des Lichtleitkörpers (31) ist. Mit Alpha ist der Grenzwinkel der Totalreflexion des Werkstoffs des Lichtleitkörpers (31) gegen seine angrenzende Umgebung (1) bezeichnet. Bei einem Lichtleitkörper (31) aus PMMA, der von Luft umgeben ist, beträgt dieser Grenzwinkel beispielsweise 42,2 Grad. Mit diesen Werten ist bei einer maximalen Ist-Krümmung der Mantelfläche (33) von z.B. 8*10⁻³/Millimeter die Mantellinie (39) des Lichtleitkörpers (31) im gekrümmten Bereich (38) länger als 208 Millimeter. Damit wird jeder im Lichtleitkörper (31) totalreflektierte Lichtstrahl mindestens einmal im gekrümmten Bereich (38) des Lichtleitkörpers (31) totalreflektiert.

Die Mantellinie (39) im gekrümmten Bereich (38) kann länger als die angegebene Mindestlänge sein. So kann der Lichtleitkörper (31) so ausgebildet sein, dass ein Lichtstrahl z.B. vier- oder fünfmal reflektiert wird. Allerdings steigen mit der Länge des Lichtwegs im Lichtleitkörper (31) die Absorptionsverluste.

Die außenliegende Mantellinie (39) hat im gekrümmten Bereich (38) ihre größte Krümmung. In den Ausführungsbeispielen grenzt der Bereich der maximalen Krümmung an die Lichteintrittsfläche (34) an. Dort beträgt der Krümmungsradius der Mantellinie (39) das siebenfache des Durchmessers der Lichteintrittsfläche (34). Angrenzend an die Lichtaustrittsfläche (36) beträgt der Krümmungsradius der Mantellinie das zwölffache des Durchmessers der Lichteintrittsfläche (34).

Der minimal zulässige Krümmungsradius des Lichtleitkörpers (31) wird bestimmt durch die maximal zulässige Krümmung der längsten Mantellinie (39). Diese maximal zulässige Krümmung ist die Krümmung der Mantellinie (39), bei der jeder in die Lichteintrittsfläche (34) eintretende Lichtstrahl im Lichtleitkörper (31) an den Grenzflächen (33) des Lichtleitkörpers (31) totalreflektiert wird. Wird dieser Wert nicht überschritten, ist in den Ausführungsbeispielen für den gesamten Lichtleitkörper (31) die Bedingung für die Totalreflexion erfüllt.

Beim Einsatz eines Lambert'schen Strahlers als Lichtquelle (20) ergibt sich die maximal zulässige Krümmung Kₘₐₓ zu Kₘₐₓ = (1 - tan (alpha)) / h. In dieser Formel ist h die Länge der Lichteintrittsfläche (34) in einer Ebene, die diese Länge und die Krümmung Kₘₐₓ aufspannen. Diese Ebene steht beispielsweise normal zur Lichteintrittsfläche (34). Der Tangens des Totalrelexions-Grenzwinkels alpha ergibt sich aus den Brechzahlen n₁ des Lichtleitkörpers (31) und n₂ der Umgebung (1) zu tan (alpha) = n₂ / (n₁²-n₂²)^{1/2}. In den in den Figuren 1 bis 7 dargestellten Ausführungsbeispielen ergibt sich mit h = 10 Millimetern, n₁ = 1,49 und n₃ = 1 die maximal zulässige Krümmung der Mantellinie (39) zu 9,5 * 10⁻³/Millimeter. Der minimal erforderliche Krümmungsradius der Mantellinie (39) beträgt damit 105 Millimeter.

Bei der in den Ausführüngsbeispielen angenommenen Leuchtdiode (21) wird das aus der Lichtquelle (20) emittierte Lichtbündel (90) theoretisch begrenzt durch Strahlen (91, 92), die unter 90 Grad zur Normalen auf die Lichteintrittsfläche (34) auftreffen, vgl. Figur 6. Diese Lichtstrahlen (91, 92) werden in den vorliegenden Ausführungsbeispielen beim Eintritt in den Lichtleitkörper (31) zum Lot auf die Lichteintrittsfläche (34) hin im Auftreffpunkt gebrochen, z.B. auf einen Winkel von 42,2 Grad zur Normalen auf die Lichteintrittsfläche (34). Damit wird ein großer Teil, z.B. 90 %, des von der Lichtquelle (20) emittierten Lichts vom Lichtleitkörper (31) aufgenommen. Bei der oben angegebenen maximal zulässigen Krümmung trifft ein im Lichtleitkörper (31) auf die äußere Mantellinie (39) gerichteter Lichtstrahl (91) dort in einem Winkel von 42,2 Grad zur Normalen im Auftreffpunkt auf und wird somit vollständig an der Grenzfläche (33) totalreflektiert.

Bei einer Leuchteinheit (10) mit einem Lambert'scher Strahler als Lichtquelle (20) ist das Verhältnis der Brechzahl des Lichtleitkörpers (31) zur Brechzahl der unmittelbaren Umgebung (1) des Lichtleitkörpers (31) größer als die.Wurzel aus zwei zu wählen. Haben der Werkstoff im Spalt (29) und in der restlichen Umgebung (1) unterschiedliche Brechzahlen, soll das kleinere Brechzahlverhältnis oberhalb dieses Wertes liegen. Der genannte Grenzwert des Brechzahlverhältnisses ist unabhängig von den geometrischen Abmessungen der Lichteintrittsfläche (34).

Hat die Lichtquelle (20) einen kleineren Abstrahlwinkel als der Lambert'sche Strahler, erhöht sich die maximal zulässige Krümmung des Lichtleitkörpers (31). Gleichzeitig sinkt das minimal erforderliche Verhältnis zwischen den Brechzahlen des Lichtleitkörpers (31) und seiner Umgebung (1).

Die maximal zulässige Krümmung der Mantellinie (39) bei einem derartigen allgemeinen Aufbau der Lichtquelle (20) mit einem Abstrahlwinkel phi ist Kₘₐₓ = (S - n₂ / n₁) / (h * S), wobei S = (1 - (n₂/n₁)² * sin²(phi/2))^{1/2} ist. Das Verhältnis der Brechzahlen ist in diesen Fällen größer oder gleich (sin²(phi/2)+1)^{1/2} zu wählen, wobei die Brechzahl des Lichtleitkörpers (31) höher ist als die Brechzahl der Umgebung (1).

Mit den obengenannten Brechzahlen und der genannten Länge der Lichteintrittsfläche ergibt sich beispielsweise bei einem Abstrahlwinkel der Lichtquelle (20) von 150 Grad eine maximale zulässige Krümmung der Mantellinie (39) von 11,8 * 10⁻³/Millimeter. Bei einem Abstrahlwinkel von 120 Grad ergeben sich 17,5 * 10⁻³/Millimeter. Das minimal erforderliche Verhältnis der Brechzahlen beträgt bei einem Abstrahlwinkel von 150 Grad 1,39 und bei einem Abstrahlwinkel von 120 Grad 1, 32.

Der maximal zulässige Abstrahlwinkel der Lichtquelle (20), bei dem ein Maximum des Lichts in den Lichtleitkörper (31) eintreten und in diesem totalreflektiert werden kann, ergibt sich somit bei einem Brechzahlverhältnis von z.B. 1,1 zu 54 Grad, bei einem Verhältnis von 1,3 zu 112 Grad.

Die Querschnittsfläche des Lichtleitkörpers (31) nimmt in den Ausführungsbeispielen von der Lichteintrittsfläche (34) zur Lichtaustrittsfläche (36) hin zu. Der Lichtleitkörper (31) hat entlang seiner Leitlinie (37) z.B. vier ineinander übergehende Querschnittsbereiche (41 - 44). Ein erster Querschnittsbereich (41) grenzt an die Lichteintrittsfläche (34) an, der vierte Querschnittsbereich (44) grenzt an die Lichtaustrittsfläche (36). Auch ein Ausführung mit drei oder mit mehr als vier Querschnittsprofilen ist denkbar.

Die Lichteintrittsfläche (34) hat beispielsweise eine ähnliche Gestalt wie die Hauptlichtaustrittsfläche (24) des Lichtverteilkörpers (23). In den Ausführungsbeispielen sind beide Flächen z.B. Kreisflächen, wobei der Durchmesser der Lichteintrittsfläche (34) z.B. um 7 % größer ist als der Durchmesser der Hauptlichtaustrittsfläche (24). Die Lichteintrittsfläche (34) kann aber auch rechteckig, oval, elliptisch, etc. ausgebildet sein.

Im ersten Querschnittsbereich (41) weitet sich der Querschnitt des Lichtleitkörpers (31) z.B. auf eine ovale Querschnittsfläche auf. Im Ausführungsbeispiel ist die Länge der kleinen Achse dieser Querschnittsfläche - diese liegt hier normal zur Schnittebene der Figur 5 - größer oder gleich dem Durchmesser der Lichteintrittsfläche (34).

Im zweiten (42) und im dritten Querschnittsbereich (43) des Lichtleitkörpers (31) verläuft die Gestalt des Lichtleitkörpers (31) zu weiteren, z.B. ovalen Querschnittsprofilen.

Im vierten Querschnittsbereich (44) geht die Querschnittsfläche in die Lichtaustrittsfläche (36) über, die z.B. annähernd die Gestalt eines Ovalabschnitts hat. Ihre Breite ist größer als ihre Höhe. Die Unterkante (51) der Lichtaustrittsfläche (36), vgl. Figur 3, hat zwei in der Höhe zueinander versetzte Abschnitte (52, 53), die mittels eines Verbindungsabschnitts (54) miteinander verbunden sind. Die Abschnitte (52, 53) können - z.B. ohne einen Verbindungsabschnitt (54) - miteinander einen Winkel von z.B. 165 Grad oder 135 Grad einschließen. Hierbei ist beispielsweise einer der Abschnitte (52; 53) normal zur Ebene der Leitlinie (37) angeordnet.

Die Seitenflächen (55) des vierten Querschnittsbereichs (44) sind spiegelbildlich zueinander angeordnet und gehen über abgerundete Längskanten in eine Deckfläche (56) über. Die Bodenfläche (61) des vierten Querschnittsbereichs (44), vgl. Figur 4, umfasst in diesen Ausführungsbeispielen zwei zueinander versetzte gekrümmte Flächenbereiche (62, 63), die beispielsweise zylindrisch aufgezogen sind. Die beiden Flächenbereiche (62, 63) sind z.B. um eine gemeinsame Achse gegeneinander verdreht. Der Verdrehungswinkel beträgt in diesen Ausführungsbeispielen 2 Grad, wobei beispielsweise der in der Lichtausbreitungsrichtung (5) links gelegene Flächenbereich (62) weiter aus dem Lichtleitkörper (31) herausragt als der rechts gelegene Flächenbereich (63). Zwischen den beiden Flächenbereichen (62, 63) liegt in diesen Ausführungsbeispielen ein Übergangsbereich (64). Dieser ist hier zumindest annähernd mittig entlang der Bodenfläche (61) angeordnet. Er schließt mit den angrenzenden Flächenbereiche (62, 63) z.B. einen Winkel von 135 Grad ein. Die Höhe des Übergangsbereichs (64) nimmt damit in der Lichtausbreitungsrichtung (5) zu. In den in den Figuren 3 und 4 dargestellten Ausführungsbeispielen beträgt die Höhe des Übergangsbereichs (64) am Verbindungsabschnitt (54) der Lichtaustrittsfläche (36) 0,5 Millimeter.

Die zum Krümmungsmittelpunkt gewandte Innenseite (47) des Lichtleitkörpers (31) kann, wie in den Figuren 1 - 3 dargestellt, einen freien Raum (6) umgreifen. Die Innenseite (47) kann aber auch z.B. angeformte oder befestigte Abstützelemente tragen, beispielsweise Stege, Speichen oder scheibenartige Abschnitte. Mittels dieser Abstützelemente kann z.B. der Lichtleitkörper (31) im Scheinwerfer befestigt werden. Diese Abstützelemente werden hier nicht als Teil des Lichtleitkörpers (31) betrachtet.

Die Primäroptik (30) umfasst beispielsweise eine dem Lichtleitkörper (31) optisch nachgeschaltete Primärlinse (71), vgl. Figur 2. Dies ist z.B. eine plankonvexe asphärische Sammellinse (71), z.B. eine Kondensorlinse. Mittels dieser Kondensorlinse (71) kann das aus der Lichtaustrittsfläche (36) austretende Licht gebündelt werden.

Die optische Linse kann auch als asphärische Auskoppelfläche an den Lichtleitkörper (31) angeformt sein. Die Primäroptik (30) hat dann zwischen dem Lichtleitkörper (31) und der optischen Linse keine Grenzfläche und keinen Spalt. Die konvexe Fläche der optischen Linse ist in diesem Fall Teil der Lichtaustrittsfläche (36). Sie kann nach unten über die Unterkante (51) ragen. Sie kann aber auch so ausgebildet sein, dass die Bodenfläche (61) in die Linse fortgesetzt ist.

Die Sekundäroptik (80) umfasst in dem in der Figur 1 dargestellten Ausführungsbeispiel eine Sekundärlinse (81). Dies ist z.B. eine Sammellinse großer Apertur. Hiermit wird eine hohe Effizienz des optischen Systems erreicht.

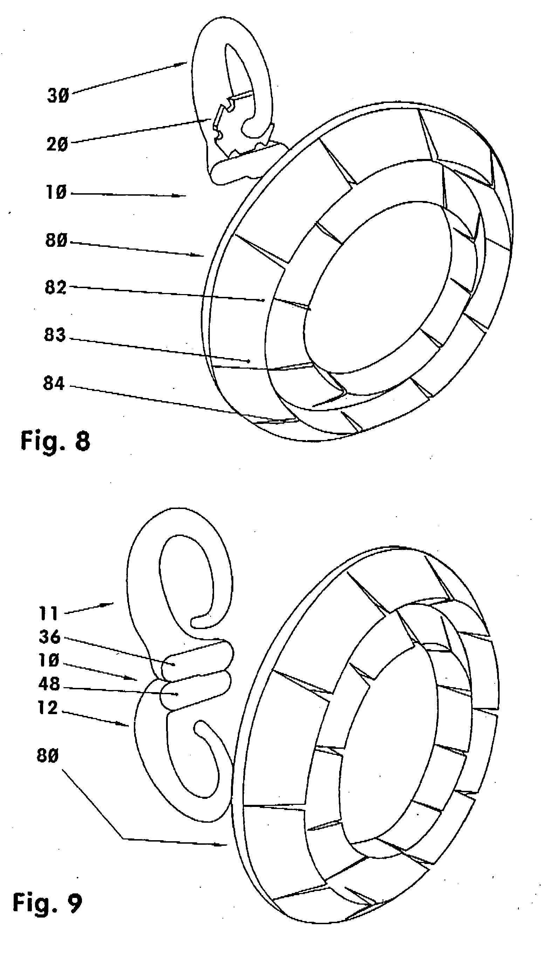

In der Figur 8 ist eine Leuchteinheit ohne Primärlinse (71) dargestellt, deren Sekundärlinse (81) den Aufbau einer Fresnellinse hat. Eine derartige Fresnellinse (82), vgl. Figur 2, ermöglicht eine geringe Linsendicke bei hoher Apertur. Gleichzeitig kann eine derartige Linse (82) mit hoher Prozesssicherheit aus z.B. Kunststoff hergestellt werden, da durch die geringe Dicke der Linse (82) nur eine geringe Schrumpfung erfolgt. In der Darstellung der Figur 8 hat die Sekundärlinse (82) in den Fresnelbereichen (83) zusätzliche Einschnitte (84). Hiermit kann gezielt ein zusätzlicher Streulichtanteil erzeugt werden.

Beim Betrieb der Leuchteinheit (10) tritt das von der Lichtquelle (20) emittierte Lichtbündel (90) wie beschrieben in den Lichtleitkörper (31) ein. Bei den genannten geometrischen Verhältnissen wird das gesamte, in den Lichtleitkörper (31) eintretende Lichtbündel (90) an der Grenzfläche (33) des Lichtleitkörpers (31) totalreflektiert. Ist jedoch die maximale Ist-Krümmung der Mantellinie (39) größer als die zulässige maximale Krümmung, kann die an die Lichteintrittsfläche (34) angrenzende Mantelfläche (33) des Lichtleitkörpers (31) zumindest im Bereich der äußeren Mantellinie (39) verspiegelt sein, um in diesem Bereich Lichtaustritt zu vermeiden.

Das Lichtbündel (90) wandert im Lichtleitkörper (31) unter weiterer Totalreflexion an der Grenzfläche (33) in Richtung der Lichtaustrittsfläche (36), vgl. Figur 2. Hierbei löst sich das Lichtbündel (90) vollständig von der Innenseite (47) des Lichtleitkörpers (31) und lagert sich immer weiter an den an die Mantellinie (39) angrenzenden Bereich der Grenzfläche (33) an. Die Winkel, die die einzelnen Lichtstrahlen mit einer Normalen im Auftreffpunkt einschließen, werden mit zunehmenden Abstand von der Lichtquelle (20) größer. Das Lichtbündel (90) schmiegt sich somit immer weiter an den äußeren Umfang des Lichtleitkörpers (31) an.

Der Verlauf der einzelnen Lichtstrahlen des Lichtbündels (90) wird beispielsweise in der Figur 5 anhand zweier Lichtstrahlen (93) und (94) beschrieben. Der Lichtstrahl (93) wird zunächst an der Grenzfläche (33) im Bereich der Innenseite (47) und dann in dem an die äußeren Mantellinie (39) angrenzenden Bereich des Lichtleitkörpers (31) totalreflektiert. Hierbei ist der Reflexionswinkel in dem an die Mantellinie (39) angrenzenden Bereich kleiner als der Reflexionswinkel im Bereich der Innenseite (47). Nach vier weiteren Reflektionen - die Reflexionswinkel werden größer mit zunehmenden Abstand von der Lichteintrittsfläche (34) - erfolgt keine weitere Reflexion im Bereich der Innenseite (47).

Der Lichtstrahl (94) wird erstmals an dem an die Mantellinie (39) umfassenden Bereich der Grenzfläche (33) reflektiert. Auch die nachfolgenden Reflektionen erfolgen an dem an die Mantellinie (39) umfassenden Bereich der Grenzfläche (33).

Beim Durchlaufen des Lichtleitkörpers (31) wird das Lichtbündel (90) geformt. So entsteht zunächst im radial außenliegenden Bereich des Lichtleiters (31) ein Lichtbündel hoher Lichtstärke, vgl. Figur 2. Das Produkt aus dem Abstrahlwinkel des Bündels und dem genutzten Querschnitt des Lichtleitkörpers (31) bleibt konstant. Die Lichtstärke im Bereich der Leitlinie (37) und im Bereich der Innenseite (47) nimmt ab.

In der Figur 7 ist ein Detail des an die Lichtaustrittsfläche (36) angrenzenden vierten Querschnittsbereichs (44) dargestellt. Das Lichtbündel (90) liegt in diesem Bereich an der Bodenfläche (61). Hier verläuft ein Teil des Lichtbündels (90) entlang des Flächenbereichs (62), ein anderer Teil entlang des Flächenbereichs (63). Der Bereich der Deckfläche (56) des vierten Querschnittsbereichs (44) bleibt unbeleuchtet.

Auf der Fahrbahn oder auf einer Messwand bildet die Sekundärlinse (81; 82) die im Ausführungsbeispiel z-förmige Unterkante (51) der Lichtaustrittsfläche (36) als scharf ausgebildete, z-förmige obere Hell-Dunkel-Grenze des ausgeleuchteten Bereichs ab. Ist die Unterkante mit einem 15 - Grad-Anstieg oder 45 - Grad - Anstieg ausgebildet, hat der ausgeleuchtete Bereich eine entsprechende Obergrenze. In der Nähe der Unterkante (51) kann an der Lichtaustrittsfläche (36) durch Überlagerung von Lichtanteilen ein Bereich hoher Leuchtdichte ausgebildet werden, der im ausgeleuchteten Bereich den sogenannten Hot spot formt. Die Leuchtdichte am Ausgang der Primäroptik (30) kann damit höher sein als die Leuchtdichte der Lichtquelle (20). Die Primäroptik (30) der Leuchteinheit (10) umfasst damit den Lichtleitkörper (31) mit veränderlichen Querschnitt und Krümmung, der durch Total-Reflexion eine verlustarme Umlenkung, Umverteilung und Bündelung des Lichtstroms vornimmt. Hierbei ist die beschriebene Anordnung weitgehend unempfindlich gegen Toleranzen der LED-Abstrahlung oder der Positionierung der Lichtquelle (20).

Im ausgeleuchteten Bereich, z.B. an einer Messwand, fällt die Beleuchtungsstärke zur Seite und nach unten hin kontinuierlich ab. Es ergibt sich so ein zur Seite und nach unten unscharf begrenzter, streifen- und fleckenfrei ausgeleuchteter Bereich mit einer oberen scharfen, z-förmigen Hell-Dunkel-Grenze.

Der Einsatz einer derartigen Leuchteinheit (10) für eine Grundlichtverteilung ist ebenfalls denkbar.

Die beschriebene Leuchteinheit (10) ist aufgrund ihrer geometrischen Gestaltung sehr effizient und erfordert nur einen geringen Bauraum. Die mit einer derartigen Leuchteinheit (10) ohne zusätzliche Entspiegelungen erreichbare absolute Auskoppeleffizienz liegt bei etwa 80 %.

Beim Einsatz von RGB-Leuchtdioden vermischen sich die einzelnen Lichtanteile beim Durchlaufen des Lichtleiters, so dass sich an der Lichtaustrittsfläche (36) weißes Licht ergibt.

Bei einer Einkopplung von z.B. zwei Leuchtdioden, können diese im ersten Drittel der Länge des Lichtleitkörpers (31), von der Lichteintrittsseite (34) aus gesehen, gekoppelt sein. Damit können Lichtverluste vermieden werden.

In der Figur 9 ist - ohne Lichtquellen - eine kombinierte Leuchteinheit (10) für das Abblendlicht und das Fernlicht dargestellt. Hierbei entspricht der Leuchteinheitsteil (11) für das Abblendlicht der in den Figuren 1 - 7 dargestellten Leuchteinheit. Diese ist in der Figur 9 oben angeordnet. Um das Fernlicht zu betreiben, wird ein unter dem ersten Leuchteinheitsteil (11) angeordneter zweiter Leuchteinheitsteil (12) zugeschaltet. Die beiden Lichtaustrittsflächen (36, 48) der Primäroptik (30) ergänzen sich. Die Leuchteinheit (10) umfasst eine Sekundärlinse (82), die das Licht beider Leuchteinheitsteile (11, 12) aufnimmt. Eine derartige Leuchteinheit kann auch ausschließlich zur Erzeugung des Fernlichts eingesetzt werden. In diesem Fall können die Lichtaustrittsflächen (36, 48) der Primäroptiken fugenfrei ineinander übergehen.

### Bezugszeichenliste:

- 1: Umgebung

- 5: Lichtausbreitungsrichtung
- 6: freier Raum

- 10: Leuchteinheit
- 11: Leuchteinheitsteil
- 12: Leuchteinheitsteil

- 20: Lichtquelle
- 21: Lumineszenzdiode, Leuchtdiode, LED
- 22: Lichtemittierender Chip
- 23: Lichtverteilkörper
- 24: Hauptlichtaustrittsfläche

- 29: Spalt, Luftspalt
- 30: Primäroptik
- 31: Lichtleitkörper
- 32: Stirnfläche
- 33: Mantelfläche, Grenzfläche von (31)
- 34: Lichteintrittsfläche
- 35: Stirnfläche, (80) zugewandt
- 36: Lichtaustrittsfläche
- 37: Leitlinie
- 38: gekrümmter Bereich
- 39: Mantellinie, längste Mantellinie von (31)

- 41: erster Querschnittsbereich
- 42: zweiter Querschnittsbereich
- 43: dritter Querschnittsbereich
- 44: vierter Querschnittsbereich
- 46: Oberkante von (36).
- 47: Innenseite
- 48: Lichtaustrittsfläche von (12)

- 51: Unterkante von (36)
- 52: Abschnitt von (51)
- 53: Abschnitt von (51)
- 54: Verbindungsabschnitt
- 55: Seitenflächen
- 56: Deckfläche

- 61: Bodenfläche
- 62: Flächenbereich von (61)
- 63: Flächenbereich von (61)
- 64: Übergangsbereich

- 71: Primärlinse, Sammellinse, Kondensorlinse

- 80: Sekundäroptik
- 81: Sekundärlinse
- 82: Fresnellinse, Sekundärlinse
- 83: Fresnelbereiche
- 84: Einschnitte

- 90: Lichtbündel
- 91 - 94: Lichtstrahlen

## Patentansprüche

1. Lichtleitkörper (31), dessen Querschnittsfläche sich von einer Lichteintrittsfläche (34) zu einer Lichtaustrittsfläche (36) zumindest bereichsweise stetig aufweitet, **dadurch gekennzeichnet,**
- **dass** der Lichtleitkörper (31) zumindest einen Bereich (38) mit einer gekrümmten Leitlinie (37) umfasst, wobei in diesem Bereich (38) die Krümmung der Leitlinie (37) konstant ist oder wobei in diesem Bereich (38) die Krümmung der Leitlinie (37) mit zunehmenden Querschnitt des Lichtleitkörpers (31) abnimmt,
- **dass** jede Gerade, die die Lichteintrittsfläche (34) schneidet, eine Mantelfläche (33) des Lichtleitkörpers (31) außerhalb der Lichtaustrittsfläche (36) durchdringt und
- **dass** die längste, den Lichtleitkörper (31) im gekrümmten Bereich (38) begrenzende Mantellinie (39) länger ist als die durch die maximale Ist-Krümmung der genannten Mantellinie (39) des Lichtleitkörpers (31) dividierte Differenz aus der Kreiszahl und dem Doppelten des größten Grenzwinkels der Totalreflexion des Werkstoffs des Lichtleitkörpers (31) gegen den oder die Werkstoffe der an den Lichtleitkörper (31) angrenzenden Umgebung (1).

2. Lichtleitkörper (31) nach Anspruch 1, **dadurch gekennzeichnet, dass** er mindestens drei entlang der Leitlinie (37) angeordnete, ineinander übergehende Querschnittsprofile (41 - 44) aufweist.

3. Lichtleitkörper (31) nach Anspruch 1, **dadurch gekennzeichnet, dass** die an die Lichtaustrittsfläche (36) angrenzende, radial außen liegende Fläche (61) des Lichtleitkörpers (31) zwei gegeneinander gestufte (62, 63) oder gegeneinander geneigte Bereiche aufweist.

4. Lichtleitkörper (31) nach Anspruch 1, **dadurch gekennzeichnet, dass** die Lichteintrittsfläche (34) zumindest annähernd eine Planfläche ist und dass die Lichtaustrittsfläche (36) plan oder konvex gewölbt ist.

5. Lichtleitkörper (31) nach Anspruch 1, **dadurch gekennzeichnet, dass** die maximale Krümmung der längsten Mantellinie (39) kleiner ist als die durch die Länge der Lichteintrittsfläche (34) dividierte Differenz aus eins und dem Tangens des Grenzwinkels der Totalreflexion des Werkstoffs des Lichtleitkörpers gegen die angrenzende Umgebung des Lichtleitkörpers, wobei die genannte Krümmung und die genannte Länge eine gemeinsame Ebene aufspannen.

6. Lichtleitkörper (31) nach Anspruch 5, **dadurch gekennzeichnet, dass** das Verhältnis der Brechzahl des Lichtleitkörpers (31) zur Brechzahl der an den Lichtleitkörper (31) angrenzenden Umgebung (1) größer ist als die Wurzel aus zwei.

7. Leuchteinheit (10) mit einer Lichtquelle (20), die mindestens eine Lumineszenzdiode (21) mit mindestens einem lichtemittierenden Chip (22) umfasst, mit mindestens einem der Lichtquelle (20) optisch nachgeschalteten, sich in der Lichtausbreitungsrichtung (5) von einer Lichteintrittsfläche (34) zu einer Lichtaustrittsfläche (36) zumindest bereichsweise stetig aufweitenden Lichtleitkörper (31), **dadurch gekennzeichnet,**
- **dass** der Lichtleitkörper (31) zumindest einen Bereich (38) mit einer gekrümmten Leitlinie (37) umfasst, wobei in diesem Bereich (38) die Krümmung der Leitlinie (37) konstant ist oder wobei in diesem Bereich (38) die Krümmung der Leitlinie (37) mit zunehmenden Querschnitt des Lichtleitkörpers (31) abnimmt,
- **dass** jede Gerade, die die Lichteintrittsfläche (34) schneidet, eine Mantelfläche (33) des Lichtleitkörpers (31) außerhalb der Lichtaustrittsfläche (36) durchdringt und
- **dass** die längste, den Lichtleitkörper (31) im gekrümmten Bereich (38) begrenzende Mantellinie (39) länger ist als die durch die maximale Ist-Krümmung der genannten Mantellinie (39) des Lichtleitkörpers (31) dividierte Differenz aus der Kreiszahl und dem Doppelten des größten Grenzwinkels der Totalreflexion des Werkstoffs des Lichtleitkörpers (31) gegen den oder die Werkstoffe der an den Lichtleitkörper (31) angrenzenden Umgebung (1).

8. Leuchteinheit (10) nach Anspruch 7, **dadurch gekennzeichnet, dass** dem Lichtleitkörper (31) eine Sekundärlinse (81; 82) optisch nachgeschaltet ist.

9. Leuchteinheit (10) nach Anspruch 7, **dadurch gekennzeichnet, dass** der Abstand der Lichtquelle (20) zur Lichteintrittsfläche (34) des Lichtleitkörpers (31) kleiner ist als 0,5 Millimeter.

10. Leuchteinheit (10) nach Anspruch 7, **dadurch gekennzeichnet, dass** die maximale Krümmung der Mantellinie (39) kleiner ist als der Differenz aus S und dem Verhältnis der Brechungszahlen der Umgebung (1) und des Lichtleitkörpers (31), dividiert durch das Produkt aus der Länge der Lichteintrittsfläche (34) und S, wobei die genannte Krümmung und die genannte Länge eine gemeinsame Ebene aufspannen und wobei S die Wurzel aus Eins minus dem Produkt aus dem Quadrat des genannten Brechungszahlenverhältnis und dem Quadrat des Sinus des halben Abstrahlwinkels der Lichtquelle (20) ist.
